# EUROPEAN PATENT APPLICATION

(11) **EP 4 617 072 A1**
(43) Date of publication of application: **17.09.2025**
(21) Application number: 25162539.8
(22) Date of filing: 10.03.2025
(51) Int. Cl.: B41J 3/407

(54) **THREE-DIMENSIONAL OBJECT PRINTING APPARATUS AND PRINTING METHOD**

(30) Priority: 11.03.2024 JP 2024036884
(71) Applicant: Seiko Epson Corporation, Tokyo 160-8801 (JP)
(72) Inventor: KUMAGAI, Masaru, Suwa-shi 392-8502 (JP)
(74) Representative: Lewis Silkin LLP

(57) **Abstract**

A three-dimensional object printing apparatus includes: a liquid discharge head (3) that discharges a liquid toward a work; an articulated robot (2) that changes a position of the liquid discharge head relative to the work, the articulated robot having a tip end that supports the liquid discharge head; a detector (2a1) that detects motion of the liquid discharge head in a scanning direction; and a control section that controls the motion of the liquid discharge head and motion of the articulated robot. The control section acquires velocity information regarding a velocity of the liquid discharge head, based on a detection result of the detector and controls an ink discharge timing of the liquid discharge head, based on the velocity information.

## Description

The present application is based on, and claims priority from JP Application Serial Number 2024-036884, filed March 11, 2024, the disclosure of which is hereby incorporated by reference herein in its entirety.

### BACKGROUND

### 1. Technical Field

The present disclosure relates to a three-dimensional object printing apparatus and a printing method.

### 2. Related Art

Some known three-dimensional object printing apparatuses are configured to print images on the surfaces of three-dimensional works in an ink jet manner. JP-A-2014-050832 discloses an example of such printing apparatuses, which includes: a robot arm; and a print head fixed to the tip end of the robot arm. This printing apparatus discharges ink from the print head onto a target object, thereby printing a desired image thereon.

When the above printer discharges ink from the print head, some ink droplets may be placed at positions misaligned from the intended ones due to motion errors of the robot arm. In this case, the print quality might be lowered.

### SUMMARY

According to an aspect of the present disclosure, a three-dimensional object printing apparatus includes: a liquid discharge head that discharges a liquid toward a work; an articulated robot that changes a position of the liquid discharge head relative to the work, the articulated robot having a tip end that supports the liquid discharge head; a detector that detects motion of the liquid discharge head in a scanning direction; and a control section that controls the motion of the liquid discharge head and motion of the articulated robot. The control section acquires velocity information regarding a velocity of the liquid discharge head, based on a detection result of the detector and controls an ink discharge timing of the liquid discharge head, based on the velocity information.

According to another aspect of the present disclosure, a printing method uses a three-dimensional object printing apparatus that includes a liquid discharge head that discharges a liquid toward a work, an articulated robot that varies a position of the liquid discharge head relative to the work, the articulated robot having a tip end that supports the liquid discharge head, and a detector that detects motion of the liquid discharge head in a scanning direction. The printing method includes: acquiring velocity information regarding a velocity of the liquid discharge head, based on a detection result of the detector; and controlling an ink discharge timing of the liquid discharge head, based on the velocity information.

### BRIEF DESCRIPTION OF THE DRAWINGS

FIG. 1 is a schematic perspective view of a three-dimensional object printing apparatus according to a first embodiment of the present disclosure.
FIG. 2 is a block diagram of an electrical configuration of the three-dimensional object printing apparatus.
FIG. 3 is a schematic perspective view of a configuration of the head unit.
FIG. 4 illustrates an example of a printing operation being performed by the three-dimensional object printing apparatus.
FIG. 5 is a flowchart of a printing method to be performed by the three-dimensional object printing apparatus.
FIG. 6 is a flowchart of a compensating process to be performed by the three-dimensional object printing apparatus.
FIG. 7 is a graph indicating an example of acceleration information acquired during the execution of the preliminary operation.
FIG. 8 is a graph indicating a velocity obtained by simply subjecting an acceleration indicated by the acceleration information of FIG. 7 to an integral process.
FIG. 9 is a graph indicating low-frequency components contained in the acceleration information of FIG. 7.
FIG. 10 is a graph indicating high-frequency components contained in the acceleration information of FIG. 7.
FIG. 11 is a graph indicating an example of velocity information based on the high-frequency components of FIG. 10.
FIG. 12 is a graph indicating an example of an ink discharge timing based on the velocity information of FIG. 11.
FIG. 13 is a block diagram of an electrical configuration of a three-dimensional object printing apparatus according to a second embodiment of the present disclosure.
FIG. 14 is a flowchart of a compensating process to be performed by the three-dimensional object printing apparatus.
FIG. 15 is a graph indicating an example of acceleration information acquired during the execution of a preliminary operation.
FIG. 16 is a graph indicating an example of angular velocity information acquired during the execution of the preliminary operation.
FIG. 17 is a graph indicating an example of the acceleration information from which gravitational acceleration components have been subtracted.
FIG. 18 is a graph indicating low-frequency components contained in the acceleration information of FIG. 17.
FIG. 19 is a graph indicating high-frequency components contained in the acceleration information of FIG. 17.
FIG. 20 is a graph indicating an example of velocity information acquired based on the high-frequency components of FIG. 19.
FIG. 21 is a graph indicating an example of an ink discharge timing based on the velocity information of FIG. 20.

### DESCRIPTION OF EMBODIMENTS

Some embodiments of the present disclosure will be described below with reference to the accompanying drawings. In these drawings, the dimensions and scales of individual components may be illustrated as appropriate differently from the actual ones. In addition, some of the components are illustrated in a schematic fashion for a better understanding. Furthermore, such embodiments are not intended to narrow the scope of the present disclosure unless otherwise specified.

For illustrative purposes, the following description will be given by using an X-axis, a Y-axis, and a Z-axis as appropriate, which are mutually orthogonal to one another. Further, one direction along the X-axis is defined as an X1 direction, whereas the direction opposite to the X1 direction is defined as an X2 direction. Likewise, one direction along the Y-axis is defined as a Y1 direction, whereas the direction opposite to the Y1 direction is defined as a Y2 direction. One direction along the Z-axis is defined as a Z1 direction, whereas the direction opposite to the Z1 direction is defined as a Z2 direction.

The X-, Y-, and Z-axes correspond to coordinate axes in a world coordinate system in which a robot 2 (described later) is installed. In this case, the Z-axis typically corresponds to the vertical axis, and the Z2 direction typically corresponds to the downward direction. This world coordinate system is related through calibration to a base coordinate system that has been defined with reference to the position of a base 210 (described later) of the robot 2. The following description will be given regarding a case where motion of the robot 2 is controlled by using the world coordinate system as a robot coordinate system, for the sake of simplicity.

The Z-axis, however, does not have to be a vertical axis. In addition, the X-, Y-, and Z-axes are typically mutually orthogonal to one another but do not necessarily have to be exactly orthogonal. Alternatively, the X-, Y-, and Z-axes may mutually intersect while forming angles in the range from 80 to 100° with one another. 1-1. Outline of Three-Dimensional Object Printing Apparatus

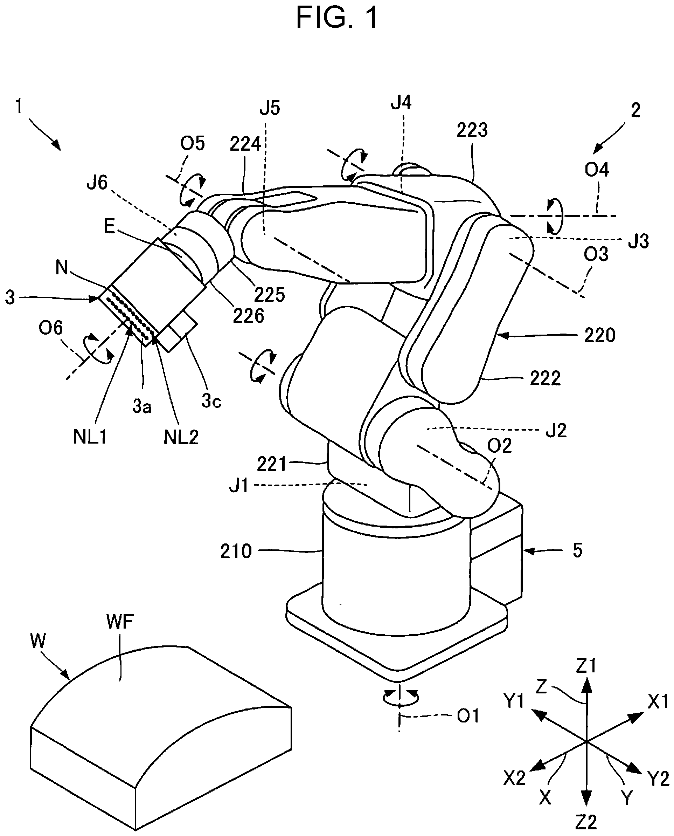

FIG. 1 is a schematic perspective view of a three-dimensional (3D) object printing apparatus 1 according to a first embodiment of the present disclosure. The 3D object printing apparatus 1 may be an apparatus that prints, in an ink jet manner, an image on the surface of a work W having a 3D shape.

The work W has a surface WF intended for a print target. In the example of FIG. 1, the surface WF is a convex surface that bulges in the Z1 direction as seen from the Y1 or Y2 direction but is parallel to the Y-axis as seen from the X1 or X2 direction. The curvature of the surface WF may vary depending on a position in a direction along the X-axis or may be entirely constant in a direction along the X-axis. It should be noted that the print target may be not only the surface WF but also another surface of the work W. The size, shape, and posture of the work W placed are not limited to those in the example of FIG. 1 and may be determined as appropriate. Alternatively, the surface WF may conform to a spherical shape.

As illustrated in FIG. 1, the 3D object printing apparatus 1 includes: the robot 2; a head unit 3; and a controller 5. Herein, the robot 2 corresponds to an example of an articulated robot. These components will be described briefly in order, based on FIG. 1.

The robot 2 may be an articulated robot that can move both the head unit 3 and the work W relative to each other. In the example of FIG. 1, the robot 2 is a six-axis vertical articulated robot.

The robot 2 has a tip end E that supports a liquid discharge head 3a (described later). The robot 2 can change the position of the liquid discharge head 3a relative to the work W. More specifically, as illustrated in FIG. 1, the robot 2 includes a base 210 and an arm 220.

The base 210 may be a mounting that supports the arm 220. In the example of FIG. 1, the base 210 is fixed, with screwing or other means, to a floor, pedestal, or other mounting surface oriented in the Z1 direction. Alternatively, the mounting surface to which the base 210 is fixed may be a wall, a ceiling, or the surface of a wagon or other movable object.

The arm 220 may be a six-axis robot arm that includes: a base end attached to the base 210; and the tip end E that can change a position and posture thereof relative to the base end in a 3D manner. More specifically, the arm 220 includes arm segments 221, 222, 223, 224, 225, and 226, which are coupled together in series. Each arm segment may also be referred to as the link.

The arm segment 221 is coupled to the base 210 via a joint J1 in such a way that the arm segment 221 can rotate around a rotation axis O1. The arm segment 222 is coupled to the arm segment 221 via a joint J2 in such a way that the arm segment 222 can rotate around a rotation axis O2. The arm segment 223 is coupled to the arm segment 222 via a joint J3 in such a way that the arm segment 223 can rotate around a rotation axis O3. The arm segment 224 is coupled to the arm segment 223 via a joint J4 in such a way that the arm segment 224 can rotate around a rotation axis O4. The arm segment 225 is coupled to the arm segment 224 via a joint J5 in such a way that the arm segment 225 can rotate around a rotation axis O5. The arm segment 226 is coupled to the arm segment 225 via a joint J6 in such a way that the arm segment 226 can rotate around a rotation axis O6.

The joints J1 to J6 may constitute a mechanism for coupling the base 210 and the arm segments 221 to 226 in such a way that individual adjacent pairs can rotate relative to each other. Hereinafter, any of joints J1 to J6 will be sometimes referred to as the joint J.

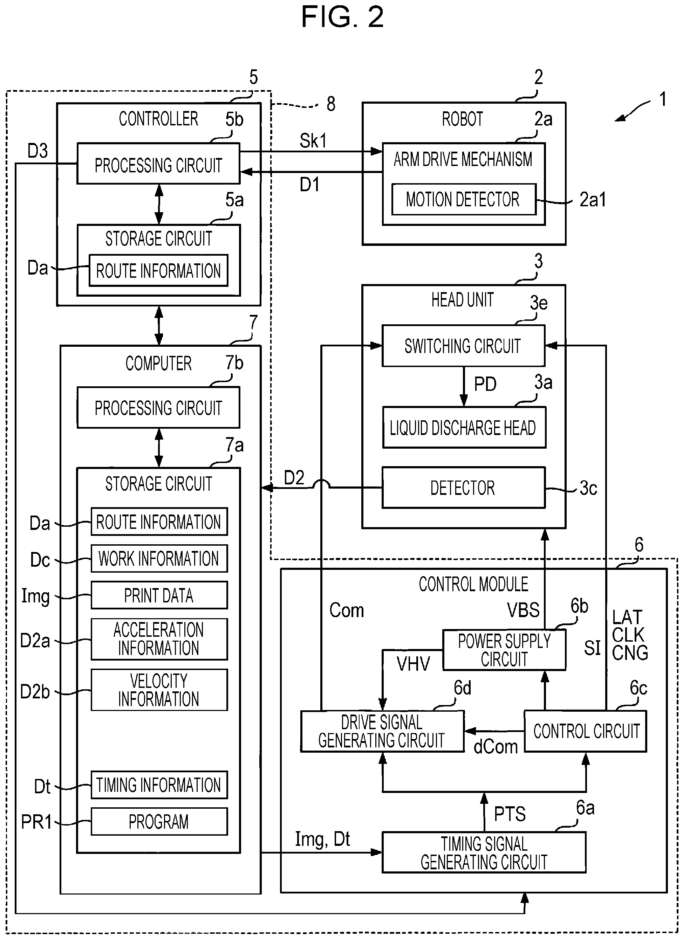

Each of the joints J1 to J6 is provided with a drive mechanism (not illustrated in FIG. 1) for rotating a corresponding adjacent pair of arm segments relative to each other. This drive mechanism includes, for example, a motor that generates driving force for the rotation, a reducer that decreases the driving force and then outputs the decreased driving force, and a rotary encoder or other type of encoder that detects a movement amount, such as an angle, of the rotation. The collection of the drive mechanisms in the joints J1 to J6 corresponds to an arm drive mechanism 2a, which will be described later with reference to FIG. 2. The collection of the encoders in the joints J1 to J6 corresponds to a motion detector 2a1, which will be described later with reference to FIG. 2.

The arm segment 226 described above, which is disposed at the tip end E of the robot 2, is equipped with the head unit 3 as an end effector. In this case, the head unit 3 may be fixed to the arm segment 226 with screwing or other means.

The head unit 3 may be an assembly that includes: the liquid discharge head 3a from which a liquid, such as ink, is to be discharged toward the work W; and a detector 3c. The head unit 3 has a first nozzle array NL1 and a second nozzle array NL2.

The detector 3c may be a sensor that detects motion of the liquid discharge head 3a in a scanning direction. For example, the detector 3c is an inertial sensor that detects one or both of the acceleration and angular velocity applied to the liquid discharge head 3a. In this embodiment, the detector 3c is an acceleration sensor that detects the acceleration applied to the liquid discharge head 3a. However, the detector 3c only has to detect a physical amount in accordance with the velocity of the liquid discharge head 3a in the scanning direction. Instead of the acceleration sensor, the detector 3c may be a tracking sensor that detects the velocity or position of the liquid discharge head 3a in the scanning direction. Alternatively, the detector 3c may be a sensor that detects two or more physical amounts in accordance with the velocity of the liquid discharge head 3a in the scanning direction, as in a second embodiment that will be described later.

The ink is not limited to a specific one; for example, the ink is ultraviolet curable ink. In addition, the ink may contain, as a dispersed material, conductive particles, such as metal particles, for use in forming electrical wires. Alternatively, the ink may be clear ink. Instead of the ink, a treatment liquid may be used for processing the surface of the work W.

The controller 5 may be a robot controller that controls the driving of the robot 2. Hereinafter, an electrical configuration of the 3D object printing apparatus 1 and details of the controller 5 will be described based on FIG. 2.

### 1-2. Electrical Configuration of Three-dimensional Object Printing Apparatus

FIG. 2 is a block diagram of the electrical configuration of the 3D object printing apparatus 1. It should be noted that FIG. 2 illustrates electrical constituent elements out of the constituting components in the 3D object printing apparatus 1. As illustrated in FIG. 2, the 3D object printing apparatus 1 includes a control section 8 in addition to the constituent elements of FIG. 1 described above. The control section 8 is configured to control the motion of both the liquid discharge head 3a and the robot 2. In the example of FIG. 2, the control section 8 includes: the controller 5; a control module 6 communicatively connected to the controller 5; and a computer 7 communicatively connected to both the controller 5 and the control module 6. Hereinafter, the functional components constituting the control section 8 will be described in order based on FIG. 2.

Some of the constituent elements of FIG. 2 may be further separated into sub-constituent elements as appropriate or may be incorporated into or integrated with others.

Some or all functions of the controller 5 or the control module 6 may be implemented using the computer 7. Alternatively, some or all functions of the controller 5 or the control module 6 may be implemented using a computer 7 or other external device that is connected to the controller 5 via a predetermined network, such as a local area network (LAN) or the Internet.

The controller 5 is configured to control the driving of the robot 2 and to generate a signal D3 for use in synchronizing both the ink discharge operation of the head unit 3 and the motion of the robot 2.

The controller 5 includes a storage circuit 5a and a processing circuit 5b.

The storage circuit 5a stores various programs to be executed by the processing circuit 5b and various types of data to be processed by the processing circuit 5b. It should be noted that part or entirely of the storage circuit 5a may be incorporated into the processing circuit 5b.

The storage circuit 5a records route information Da.

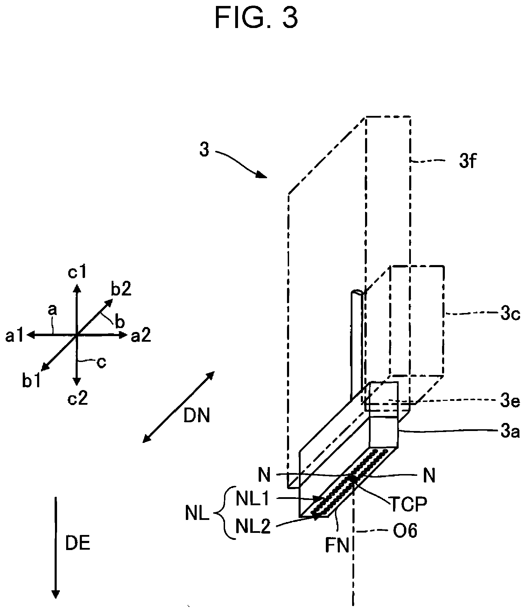

The route information Da is used to control the motion of the robot 2. The route information Da may be information that indicates a target position and posture of the liquid discharge head 3a or the head unit 3 moving along the route during the execution of the printing operation. In this case, the position and posture of the liquid discharge head 3a are defined as the position and posture of the robot 2 at a tool center point TCP (described later; see FIG. 3). The route information Da thus contains position information that indicates the target position at the tool center point TCP and also contains posture information that indicates the target posture at the tool center point TCP. For example, the position information is expressed by a plurality of coordinate values that indicate the target position in the robot coordinate system, whereas the posture information is expressed by a plurality of vectors that indicate the target posture related to the target position. The tool center point TCP may be a virtual point having a fixed positional relationship with the liquid discharge head 3a. The tool center point TCP may be located apart from the liquid discharge head 3a. The route information Da may also be expressed using the work coordinate system. In this case, the route information Da may be used to control the motion of the robot 2 after coordinate values in the work coordinate system have been converted into those in the base or world coordinate system.

The processing circuit 5b controls the operation of the arm drive mechanism 2a in the robot 2, based on the route information Da. In addition, the processing circuit 5b generates the signal D3.

The arm drive mechanism 2a, which corresponds to the collection of the drive mechanisms disposed in the joints J1 to J6 described above, includes a motor and an encoder for each joint J. The motor drives a corresponding joint of the robot 2, whereas the encoder detects the rotation angle of a corresponding joint of the robot 2. The collection of the encoders in the joints J1 to J6 corresponds to the motion detector 2a1. The motion detector 2a1, which is disposed in the robot 2, detects the motion of the robot 2. In short, the 3D object printing apparatus 1 is provided with the motion detector 2a1.

The processing circuit 5b performs inverse kinematics calculation by which the route information Da is converted into motion amounts, such as a rotation angle and a rotation velocity, of each joint J in the robot 2. The processing circuit 5b then generates a control signal Sk1, based on an output D1 from each encoder in the motion detector 2a1 in such a way that the movement amounts, such as an actual rotation angle and rotation velocity, of each joint J become equal to the results of the calculation based on the route information Da. After that, the processing circuit 5b outputs the generated control signal Sk1 to the arm drive mechanism 2a. The control signal Sk1 may be a signal for use in driving the motors in the arm drive mechanism 2a. In this case, the control signal Sk1 may be compensated as appropriate by the processing circuit 5b, based on an output from a distance sensor (not illustrated).

The processing circuit 5b generates the signal D3, based on the output D1 from at least one of the plurality of encoders, each of which has the motion detector 2a1. For example, the processing circuit 5b generates, as the signal D3, a trigger signal that contains a pulse with a timing at which the output D1 from one of the plurality of encoders becomes equal to a predetermined value.

The control module 6 may be a circuit that controls the ink discharge operation of the head unit 3, based on the signal D3 output from the controller 5 as well as print data Img and timing information Dt from the computer 7. The control module 6 includes a timing signal generating circuit 6a, a power supply circuit 6b, a control circuit 6c, and a drive signal generating circuit 6d.

The timing signal generating circuit 6a generates a timing signal PTS, based on both the signal D3 and the timing information Dt. The timing signal generating circuit 6a may be a circuit that generates the timing signal PTS at the timing indicted by the timing information Dt. In this case, the detection of the signal D3 triggers the timing signal generating circuit 6a to start generating the timing signal PTS.

Through the timing signal PTS generated in this manner and based on the detection result of the motion detector 2a1, the control section 8 determines a start timing at which the liquid is to be discharged from the liquid discharge head 3a. In this way, the control section 8 can synchronize both the motion of the robot 2 and the motion of the liquid discharge head 3a in a simplified manner. Furthermore, the control section 8 can cause the liquid discharge head 3a to discharge the ink at a highly accurate timing and can also acquire velocity information D2b at a highly accurate timing.

The timing signal generating circuit 6a includes, for example, a clock source, a pre-timing signal generating circuit, and a delay circuit, none of which is illustrated. The clock source may be an oscillator that outputs a clock signal of a constant frequency. The pre-timing signal generating circuit may be a timer that generates pulses in units of a predetermined number of clocks contained in the clock signal from the clock source. Further, the pre-timing signal generating circuit starts the operation in response to the detection of the signal D3, thereby generating a pre-timing signal in synchronization with the signal D3. The delay circuit may be a timer that generates pulses in units of a predetermined number of clocks from the clock source with reference to each pulse contained in the pre-timing signal from the pre-timing signal generating circuit. Further, the delay circuit generates the timing signal PTS, which is delayed from the pre-timing signal from the pre-timing signal generating circuit.

The power supply circuit 6b is supplied with electric power from a commercial power source (not illustrated) and generates various predetermined electric potentials. The generated electric potentials are applied as appropriate to individual components in the control module 6 and the head unit 3. For example, the power supply circuit 6b generates a power potential VHV and an offset electric potential VBS. The offset electric potential VBS is applied to the head unit 3, whereas the power potential VHV is applied to the drive signal generating circuit 6d.

Based on the timing signal PTS, the control circuit 6c generates a control signal SI, a waveform designation signal dCom, a latch signal LAT, a clock signal CLK, and a change signal CNG, all of which are synchronized with the timing signal PTS. Of these signals, the waveform designation signal dCom is supplied to the drive signal generating circuit 6d, and the remaining signals are supplied to a switching circuit 3e in the head unit 3.

The control signal SI may be a digital signal for use in designating the operational states of drive elements disposed in the liquid discharge head 3a of the head unit 3. More specifically, the control signal SI may be a signal for use in designating whether to supply a drive signal Com (described later) to each drive element, based on the print data Img. In accordance with this designation, for example, the control module 6 designates whether to discharge the ink through the nozzles related to the drive elements and the amounts of ink to be discharged through the nozzles. The waveform designation signal dCom may be a digital signal for use in specifying the waveform of the drive signal Com. Each of the latch signal LAT and the change signal CNG may be a signal to be used together with the control signal SI and for use in specifying the driving timings of the drive elements to specify the timings at which the ink is to be discharged through the nozzles. The clock signal CLK may be a reference clock signal synchronized with the timing signal PTS.

The drive signal generating circuit 6d may be a circuit that generates the drive signal Com, which is used to drive each drive element disposed in the liquid discharge head 3a of the head unit 3. More specifically, the drive signal generating circuit 6d includes, for example, a digital-analog (DA) converter circuit and an amplifier circuit. In the drive signal generating circuit 6d, the DA converter circuit converts the waveform designation signal dCom output from the control circuit 6c from the digital format into the analog format. Then, the amplifier circuit amplifies the resultant analog signal by using the power potential VHV from the power supply circuit 6b. In this way, the drive signal generating circuit 6d can generate the drive signal Com. In this case, the drive signal Com contains a drive pulse PD, which is an actual waveform signal to be supplied to each drive element. The drive pulse PD is supplied from the drive signal generating circuit 6d to each drive element via the switching circuit 3e of the head unit 3.

In this embodiment, the switching circuit 3e may be a circuit that includes a switching element that selectively supplies, based on the control signal SI, at least a portion of the waveform contained in the drive signal Com as the drive pulse PD.

The computer 7 performs the functions of: generating the route information Da and timing information Dt, supplying route information Da and other information to the controller 5, and supplying the print data Img, the timing information Dt and other information to the control module 6.

The computer 7 includes a storage circuit 7a and a processing circuit 7b. The computer 7 may further include a keyboard, a mouse, and some other input devices (not illustrated) that receive user's operations. The computer 7 may further include a liquid crystal panel or other display device that displays information required to generate the route information Da and the timing information Dt

The storage circuit 7a stores various programs to be executed by the processing circuit 7b and various types of data to be processed by the processing circuit 7b. For example, the storage circuit 7a includes a semiconductor memory, such as one or both of a volatile memory such as random access memory (RAM) and a nonvolatile memory such as read-only memory (ROM), electrically erasable programable read-only memory (EEPROM), or programmable read-only memory (PROM). In this case, a portion or entirety of the storage circuit 7a may be incorporated into the processing circuit 7b.

The storage circuit 7a stores the route information Da, work information Dc, the print data Img, acceleration information D2a, the velocity information D2b, the timing information Dt, and program PR1.

The work information Dc may be data that represents the shape of at least a portion of the work W. More specifically, the work information Dc may be 3D data in a standard triangulated language (STL) format that represents the shape of the work W by using a plurality of polygons. The work information Dc contains coordinate information, which may be information regarding the coordinates of the peaks of the polygons, and vector information, which may be information regarding normal vectors indicating whether the surfaces of the polygons are front or rear. The work information Dc may be generated by subjecting computer-aided design (CAD) data that indicates the 3D shape of the work W to a converting process, as necessary. The work information Dc may be represented using the coordinate values in the work coordinate system or point group data regarding coordinate values in the base or world coordinate system.

The print data Img may be information that indicates an image to be printed on the surface WF of the work W for each printing route (pass) indicated by the route information Da. In this case, the image will be made up of a plurality of small dots on the work W. Thus, the image will be printed on the surface WF of the work W by discharging ink droplets onto the surface WF of the work W at the positions related to the dots. Actually, the image to be printed is formed by overlapping two image elements created by ink droplets discharged through a first nozzle array NL1 and a second nozzle array NL2, both of which will be described later. In this embodiment, the print data Img contains first print data intended for the first nozzle array NL1 (described later) and second print data intended for the second nozzle array NL2 (described later). The first print data may be information that indicates, of the image elements constituting the image to be printed on the surface WF of the work W, the image element to be printed by ink droplets discharged through the first nozzle array NL1 (described later). Likewise, the second print data may be information that indicates, of the image elements constituting the image to be printed on the work W, the image element to be printed by ink droplets discharged through the second nozzle array NL2 (described later).

The acceleration information D2a may be information that indicates the acceleration of the liquid discharge head 3a in the scanning direction. The acceleration information D2a is acquired based on the movement information D2. The movement information D2 may be information that indicates a detection result of the detector 3c. More specifically, the movement information D2 may be information that indicates the motion of the liquid discharge head 3a in the scanning direction. In this embodiment, the movement information D2 contains the acceleration information D2a. In this embodiment, the acceleration information D2a is thus acquired by obtaining the movement information D2.

The velocity information D2b may be information that indicates the velocity of the liquid discharge head 3a. The velocity information D2b is acquired based on the movement information D2. In this embodiment, the velocity information D2b is generated by subjecting the acceleration information D2a to an integral process (described later), for example.

The timing information Dt may be information that indicates an ink discharge timing of the liquid discharge head 3a. The timing information Dt is generated based on the velocity information D2b.

The program PR1 may be a program for use in performing various processes of generating the timing information Dt.

The processing circuit 7b performs the above processes by executing the program PR1 and some other programs. The processing circuit 7b includes one or more processors, such as a central processing unit (CPU).

The processing circuit 7b performs various processes of generating the timing information Dt by executing the program PR1. More specifically, the processing circuit 7b generates the timing information Dt, based on the movement information D2, which indicates the detection result of the detector 3c. In this embodiment, the processing circuit 7b acquires the acceleration information D2a, based on the movement information D2 that has been acquired during the execution of a preliminary operation (described later). The processing circuit 7b then acquires the velocity information D2b based on the acceleration information D2a and generates the timing information Dt based on the velocity information D2b.

As described above, the control section 8 can perform both the preliminary operation (described later) and the printing operation. The control section 8 acquires the velocity information D2b regarding the velocity of the liquid discharge head 3a, based on the detection result of the detector 3c. The control section 8 then controls the ink discharge timing of the liquid discharge head 3a, based on the velocity information D2b.

The 3D object printing apparatus 1 configured above controls the driving of the robot 2, based on the route information Da. In addition, the 3D object printing apparatus 1 controls the driving of the liquid discharge head 3a, based on the print data Img, the timing information Dt, and the signal D3. As a result of this, the 3D object printing apparatus 1 performs the printing operation. During this printing operation, the robot 2 changes the position and posture of the liquid discharge head 3a, based on the route information Da, while the liquid discharge head 3a discharges ink toward the work W in droplet form at a predetermined timing based on both the print data Img and the signal D3. After having been discharged and flown in the air, the ink droplets arrive at the surface WF of the work W. It should be noted that the arrival of the ink droplets is sometimes referred to as the landing of the ink droplets. Through this process, a desired image is created on the surface WF of the work W based on the print data Img.

Prior to the above printing operation, the 3D object printing apparatus 1 performs both the preliminary operation and a compensating process, both of which will be described later. The preliminary operation is substantially the same as the printing operation, except that the control section 8 uses provisional timing information Dt and the liquid discharge head 3a does not have to discharge ink droplets. When using the provisional timing information Dt, the liquid discharge head 3a discharges the ink at constant time intervals. In the compensating process, the control section 8 compensates the provisional timing information Dt, based on the movement information D2 that has been acquired during the preliminary operation, thereby generating the timing information Dt to be used for the printing operation. In this way, the control section 8 can acquire the timing information Dt, which can be used to suppress ink droplets from landing at positions misaligned from the intended ones, for example, due to motion errors of the robot 2.

As described above, the 3D object printing apparatus 1 controls the ink discharge timing of the liquid discharge head 3a, based on the velocity information D2b regarding the velocity of the liquid discharge head 3a. This configuration can control the lowering of the print quality even if the velocity of the liquid discharge head 3a in the scanning direction fluctuates, for example, due to motion errors of the robot 2. Consequently, it is possible to provide better print quality than before.

If a liquid discharge head 3a discharges ink at constant time intervals while moving in the scanning direction at fluctuating velocities, for example, due to motion errors of the robot 2, ink droplets that have been discharged from the liquid discharge head 3a onto the surface WF of the work W may be arranged thereon at irregular intervals. In addition, some of the ink droplets may coalesce into a globule. As a result, the print quality might be lowered. 1-3. Configuration of Head Unit

FIG. 3 is a schematic perspective view of a configuration of the head unit 3. For the sake of explanation, the following description will be given by using an a-axis, a b-axis, and a c-axis as appropriate, which are mutually orthogonal to one another. Further, one direction along the a-axis is defined as an a1 direction, whereas the direction opposite to the a1 direction is defined as an a2 direction. Likewise, one direction along the b-axis is defined as a b1 direction, whereas the direction opposite to the b1 direction is defined as a b2 direction. One direction along the c-axis is defined as a c1 direction, whereas the direction opposite to the c1 direction is defined as a c2 direction.

The a-, b-, and c-axes correspond to coordinate axes in a tool coordinate system applied to the head unit 3. As a result of the above operation of the robot 2, the positional and postural relationships with the world coordinate system or the robot coordinate system change. In the example of FIG. 3, the c-axis is parallel to the above rotation axis O6. The a-, b-, and c-axes are typically mutually orthogonal to one another but do not necessarily have to be exactly orthogonal. Alternatively, the a-, b-, and c-axes may mutually intersect while forming angles in the range from 80 to 100° with one another. This tool coordinate system is related through calibration to the base or robot coordinate system.

The above tool coordinate system is defined with reference to the tool center point TCP. Thus, the position and posture of the liquid discharge head 3a are specified with reference to the tool center point TCP. In the example of FIG. 3, the tool center point TCP is located at the center of a nozzle surface FN of the head unit 3. However, there is no limitation on where the tool center point TCP is. Alternatively, the tool center point TCP may be located apart from the liquid discharge head 3a in a discharge direction DE of the ink. In this case, a printing route RU (described later) is defined over the surface WF of the work W.

As described above, the head unit 3 is provided with the liquid discharge head 3a and the detector 3c, which are supported by a support body 3f indicated by the alternate long and two short dashes line of FIG. 3. In the example of FIG. 3, the head unit 3 has a single liquid discharge head 3a; however, there is no limitation on the number of head units 3. Alternatively, the head unit 3 may have a plurality of liquid discharge heads 3a. The head unit 3 may include any other constituent element in addition to the liquid discharge head 3a and the detector 3c. For example, the head unit 3 includes: a pressure adjustment valve that adjusts the pressure of the ink in the liquid discharge head 3a; and/or an energy source that emits light, heat, an electron beam, radiation, or another form of energy that can cure or solidify the ink on the surface WF of the work W.

The support body 3f is attached to the arm segment 226 described above. Thus, both the liquid discharge head 3a and the detector 3c are supported by the arm segment 226 with the support body 3f therebetween. In this case, the positions of the liquid discharge head 3a and the detector 3c relative to the arm segment 226 are fixed. In this example of FIG. 3, the detector 3c is located apart from the liquid discharge head 3a in the b2 direction. However, the position of the detector 3c is not limited to that of FIG. 3. In other words, the detector 3c may be located at any given position.

The liquid discharge head 3a includes: the nozzle surface FN; and a plurality of nozzles N formed in the nozzle surface FN. The nozzle surface FN refers to a nozzle surface with the nozzles N. The nozzle surface FN may be made of silicon (Si) or a metal and may be formed by forming nozzles in a flat plate member. The plurality of nozzles N constitute a first nozzle array NL1 and a second nozzle array NL2, which are arranged side by side in a direction along the a-axis with a predetermined interval therebetween. Each of the first nozzle array NL1 and the second nozzle array NL2 is formed of a predetermined number of nozzles N arrayed along a nozzle array direction DN, which is a direction along the b-axis. In the liquid discharge head 3a, constituent elements related to the nozzles N constituting the first nozzle array NL1 are substantially symmetric in a direction along the a-axis to those related to the nozzles N constituting the second nozzle array NL2.

The first nozzle array NL1 and the second nozzle array NL2 are arranged in a direction along the a-axis, which is identical to a main-scanning direction DS in which the liquid discharge head 3a moves during the execution of the preliminary operation and the printing operation. Both the first nozzle array NL1 and the second nozzle array NL2 are included in nozzle arrays NL.

For each nozzle N, the liquid discharge head 3a includes: a piezoelectric element (not illustrated) as the drive element; and a cavity (not illustrated) in which the ink is to be filled. In this case, the piezoelectric element varies the pressure of a corresponding cavity to discharge the ink through a nozzle corresponding to this cavity in the discharge direction DE, or in the c2 direction. It should be noted that, instead of the piezoelectric element, the drive element that discharges the ink through the nozzle may be a heater that heats the ink in the cavity.

The detector 3c is configured to detect the acceleration of the liquid discharge head 3a in the scanning direction. The detector 3c may include a triaxle acceleration sensor, such as an a-axis, b-axis, and c-axis sensor. Instead of the acceleration sensor, the detector 3c may include any other sensor, such as an angular velocity sensor. 1-4. Printing Method

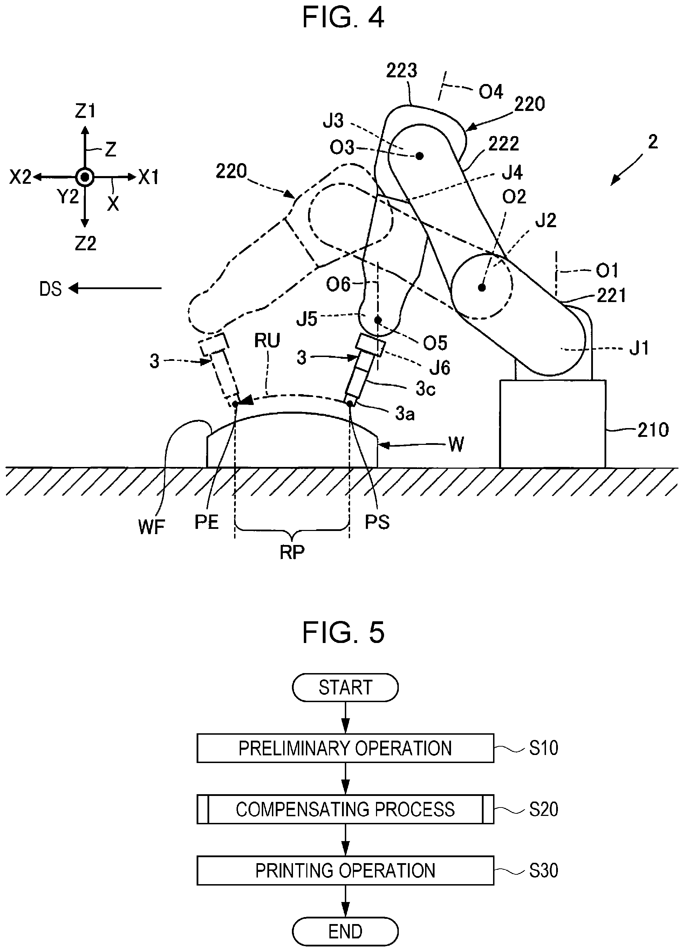

FIG. 4 illustrates an example of a printing operation being performed by the 3D object printing apparatus 1 described above. In the example of FIG. 4, the robot 2 is printing an image on the surface WF of the work W placed apart from the robot 2 toward the X2-side.

In the printing operation, the robot 2 prints an image on the surface WF of the work W by appropriately discharging the ink onto the surface WF of the work W through the nozzles N, based on the print data Img and the timing information Dt. In this period, the robot 2 changes the position and posture of the liquid discharge head 3a, based on the route information Da. The printing operation thus may be an operation to be performed by the 3D object printing apparatus 1 in such a way that the robot 2 moves both the work W and the head unit 3 relative to each other in the main-scanning direction DS while the head unit 3 discharges ink droplets at different timings. In this printing operation, the liquid discharge head 3a keeps a predetermined posture relative to the surface WF, based on the posture information contained in the route information Da while moving along the printing route RU based on the position information contained in the route information Da. The printing route RU may be a route extending between a position PS and a position PE.

Optionally, the control section 8 prints an image indicated by the print data Img through a plurality of passes. In this case, the image indicated by the print data Img is formed of a plurality of image elements related to the respective passes. The plurality of image elements are arranged side by side in a sub-scanning direction that intersects the main-scanning direction DC. In this case, adjacent pairs of image elements have overlapping areas. For each overlapping area, the discharging operation using the nozzles N is controlled in such a way that the recording ratio between the nozzles N for the adjacent passes is equally shared.

In the example of FIG. 4, the printing route RU extends along the X-axis as seen from the Z2 direction. In short, the main-scanning direction DS may be a direction along the X-axis as seen from a direction along the Z-axis. During the execution of the printing operation, the robot 2 mainly operates only three joints J, or the joints J2, J3, and J5, out of all the joints J. In this case, the robot 2 moves the arm 220 until the rotation axes of the three joints J have become parallel to the Y-axis, and then operates only these joints J. This configuration can move the liquid discharge head 3a in the main-scanning direction DS while controlling the wobbling of the head unit 3 in the directions orthogonal to the main-scanning direction DS, as opposed to a configuration in which the robot 2 operates four or more joints J.

Alternatively, the robot 2 may perform the printing operation by operating four or more of the six joints J. In this case, the position and posture of the work W placed is not limited to those in the example of FIG. 4. The work W may be placed at any given position and in any given posture. Furthermore, the printing route RU is not limited to that in the example of FIG. 4 and may be determined as appropriate in accordance with the shape, print area, position, posture, and other properties of the work W placed. The number, positions, and other control schemes of joints J to be operated during the printing operation may depend on the printing route RU and the posture of the head unit 3 relative to the work W during the printing operation.

In the printing operation described above, the control section 8 controls the motion of the robot 2 in such a way that the head unit 3 moves along the printing route RU at a constant velocity. However, even if the control section 8 attempts to move the head unit 3 at a constant velocity, the head unit 3 may actually move at an erroneous velocity. In such cases, when the liquid discharge head 3a discharges the ink at constant time intervals, the quality of the resultant image may be lowered due to the erroneous velocity. Moreover, when the head unit 3 prints an image designated by the print data Img by printing a plurality of image elements through respective passes, the difference in shading between the overlapping area and another area in the image that has been printed through the passes may be noticeable. Furthermore, since the adjacent image elements are printed through the respective passes at different ink discharging timings due to the above erroneous velocity, the print quality may be lowered.

To control lowering of the image quality as described above, the 3D object printing apparatus 1 compensates the timing information Dt. Hereinafter, details of this compensation will be described below.

FIG. 5 is a flowchart of the printing method to be performed by the 3D object printing apparatus 1. In this printing method, Steps S10, S20, and S30 are performed in this order.

At Step S10, the control section 8 performs the preliminary operation in which the liquid discharge head 3a scans along the printing route RU and acquires the acceleration information D2a accordingly.

In the preliminary operation, the control section 8 determines a timing at which the velocity information D2b is to be acquired, based on the detection result of the motion detector 2a1. The control section 8 thereby can acquire the velocity information D2b at a highly accurate timing. In short, the control section 8 can acquire the velocity information D2b at the timing accurately synchronized with the motion of the robot 2.

At Step S20, the control section 8 generates the timing information Dt, based on the acceleration information D2a that has been acquired during the execution of the preliminary operation at Step S10.

At Step S30, the control section 8 performs the printing operation in which the liquid discharge head 3a scans along the printing route RU and discharges the ink onto the surface WF of the work W. In this case, the control section 8 compensates the ink discharge timing of the liquid discharge head 3a by using the timing information Dt based on the acceleration information D2a that has been acquired during the execution of the preliminary operation at Step S10. The control section 8 thus controls the ink discharge timing of the liquid discharge head 3a during the execution of the printing operation at Step S30, based on the acceleration information D2a that has been acquired during the execution of the preliminary operation at Step S10. The control section 8 thereby compensates the ink discharge timing during the execution of the printing operation at Step S30, based on the acceleration information D2a acquired when the liquid discharge head 3a is actually scanning along the printing route RU. Consequently, it is possible to provide appropriately improved print quality.

At Step S30, the control section 8 determines the timing of starting the printing operation, in which the liquid discharge head 3a discharges the ink onto the surface WF of the work W, based on the detection result of the motion detector 2a1. The control section 8 thereby can synchronize the motion of the robot 2 with the timing of starting the printing operation. Consequently, it is possible to reduce a misalignment of the print position and a deviation of the start timing of the printing operation.

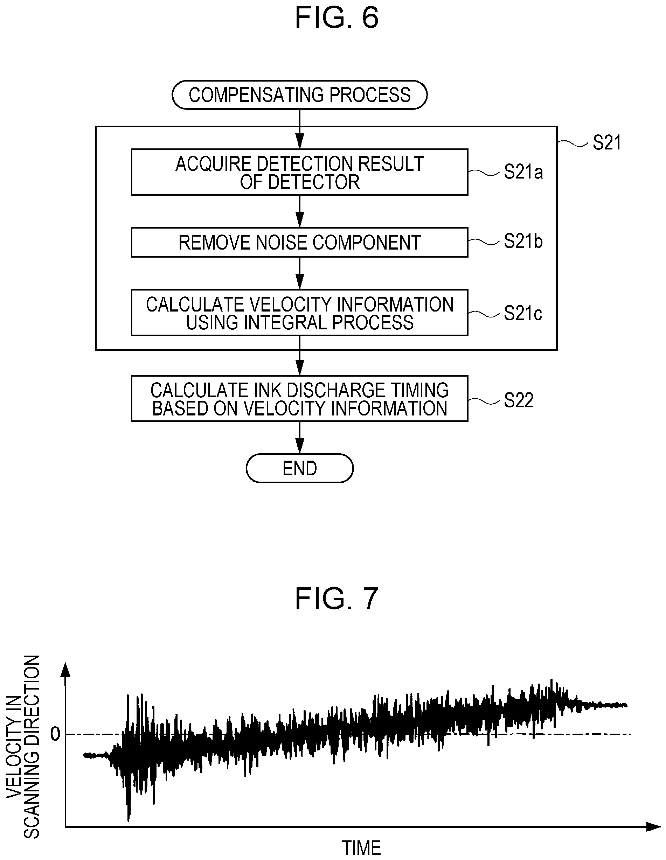

FIG. 6 is a flowchart of the compensating process at Step S20 to be performed by the 3D object printing apparatus 1. At Step S20, Steps S21 and S22 are performed in this order. This means that Steps S21 and S22 are also included in the printing method using the 3D object printing apparatus 1.

Step S21 may be a process of acquiring the velocity information D2b regarding the velocity of the liquid discharge head 3a, based on the detection result of the detector 3c. At Step S21 in this embodiment, Steps S21a, S21b, and S21c are performed in this order.

At Step S21a, the control section 8 acquires the acceleration information D2a regarding the acceleration of the liquid discharge head 3a, based on the detection result of the detector 3c. The detection result of the detector 3c has been acquired as the movement information D2.

At Step S21b, the control section 8 calculates a scanning velocity of the liquid discharge head 3a by subjecting the acceleration information D2a to an arithmetic process using a high pass filter. Even if the acceleration information D2a contains information regarding some error components, such as those caused by the phenomenon in which the acceleration of the liquid discharge head 3a fluctuates in the gravitational direction in relation to a changing posture of the liquid discharge head 3a, this process can yield a highly accurate scanning velocity by easily removing such errors. By performing Step S21b in this manner, the control section 8 generates the velocity information D2b.

At Step S21c, the control section 8 calculates, based on the acceleration information D2a, a scanning velocity of the liquid discharge head 3a, which is a velocity of the liquid discharge head 3a in the scanning direction when the liquid discharge head 3a scans along the printing route RU. As a result of Step S21c, the control section 8 acquires the velocity information D2b, based on the acceleration information D2a.

Step S22 may be a process of controlling the ink discharge timing of the liquid discharge head 3a, based on the velocity information D2b. At Step S22 in this embodiment, the control section 8 controls the ink discharge timing of the liquid discharge head 3a, based on the velocity information D2b that has been acquired based on the acceleration information D2a. By performing Step S22 in this manner, the control section 8 generates the timing information Dt. In this way, the control section 8 can effectively acquire highly accurate acceleration information D2a.

At Step S22, as described above, the control section 8 controls the ink discharge timing of the liquid discharge head 3a during the execution of the printing operation at Step S30, based on the scanning velocity of the liquid discharge head 3a, which is the velocity in the scanning direction at which the liquid discharge head 3a scans along the printing route RU. The control section 8 thereby can appropriately control the ink discharge timing of the liquid discharge head 3a in accordance with the printing route RU or the shape of the work W. When printing an image on a nonplanar print surface, such as the surface WF of the work W, a 3D object printing apparatus 1 needs to change the position and posture of a liquid discharge head 3a in accordance with the shape of this print surface. In this case, of the gravitational acceleration applied to the liquid discharge head 3a, the component in the scanning direction tends to vary. Thus, if the control section 8 simply converts the acceleration, which is the detection result of an acceleration sensor such as the detector 3c, into a velocity, this velocity may contain some error components with respect to an actual velocity of the liquid discharge head 3a in the scanning direction.

FIG. 7 is a graph indicating an example of the acceleration information D2a acquired during the execution of the preliminary operation at Step S20. In the graph of FIG. 7, the vertical axis represents acceleration in the scanning direction which is indicated by the acceleration information D2a acquired during the execution of the preliminary operation at Step S20, and the horizontal axis represents time. In this case, the acceleration in the scanning direction which is indicated by the acceleration information D2a may be a detection value of the detector 3c along a detection axis in the scanning direction. The detection value along the detection axis may correspond to the acceleration in a direction along the a-axis of FIG. 3. The graph of FIG. 7 indicates the acceleration information D2a when the liquid discharge head 3a moves along the printing route RU, which is formed over a bulging print surface as illustrated in FIG. 3. The acceleration information D2a is acquired at Step S21a described above.

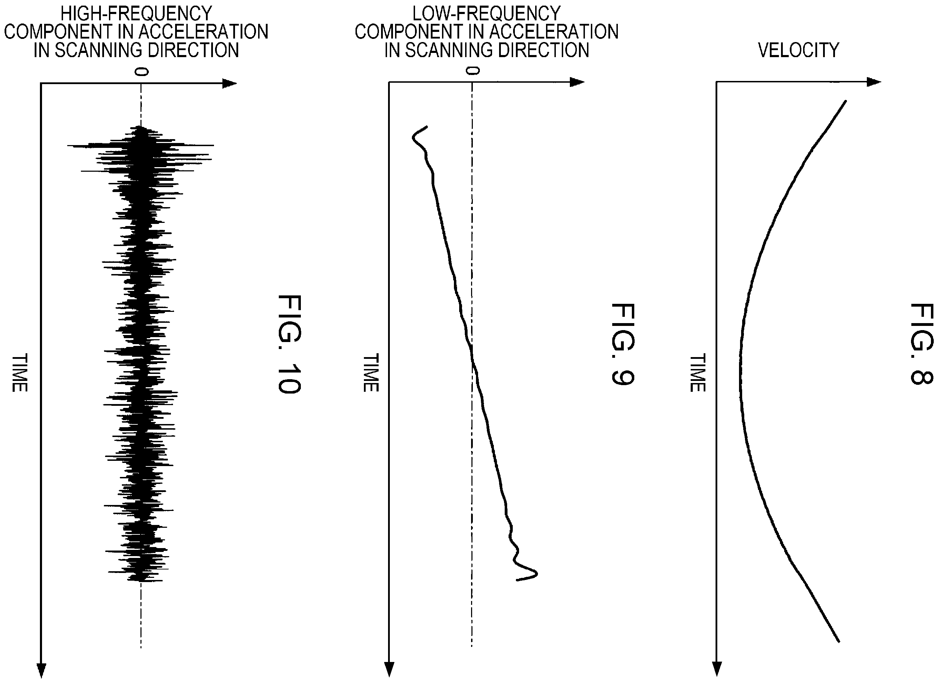

FIG. 8 is a graph indicating a velocity obtained by simply subjecting the acceleration indicated by the acceleration information D2a of FIG. 7 to an integral process. In the graph of FIG. 8, the vertical axis represents velocity obtained by simply subjecting the acceleration indicated by the acceleration information D2a of FIG. 7 to the integral process, and the horizontal axis represents time.

When the liquid discharge head 3a moves along the printing route RU, for example, as illustrated in FIG. 4, the position of the liquid discharge head 3a as well as the posture of the liquid discharge head 3a changes. Therefore, a detection value of the detector 3c in a detection axis in the scanning direction contains not only an acceleration of the liquid discharge head 3a moving in the scanning direction but also some error components, such as those caused by the phenomenon in which the acceleration of the liquid discharge head 3a fluctuates in the gravitational direction in relation to a changing posture of the liquid discharge head 3a. Those error components may include a component of gravitational acceleration in the scanning direction, which depends on the posture of the liquid discharge head 3a. Hereinafter, such error components are sometimes referred to as noise components.

Even if the liquid discharge head 3a moves along the printing route RU at a constant velocity, the value obtained simply by subjecting the acceleration indicated by the acceleration information D2a in the graph of FIG. 7 to the integral process tends to be strongly influenced by the noise components, as illustrated in FIG. 8.

In this embodiment, of the error components, an error generated by the gravitational acceleration applied to the liquid discharge head 3a can be the most prominent. As indicated in the graph of FIG. 7, the acceleration in the scanning direction has a negative value at the print starting point on the printing route RU. This is because the component in the scanning direction which is contained in the gravitational acceleration applied to the liquid discharge head 3a has a negative value. Likewise, the acceleration in the scanning direction has a positive value at the print end point on the printing route RU. This is because the component in the scanning direction which is contained in the gravitational acceleration applied to the liquid discharge head 3a has a positive value. In this embodiment, as described above, the acceleration of the liquid discharge head 3a tends to be strongly influenced by variations in the gravitational acceleration component in the scanning direction, which depend on the posture of the liquid discharge head 3a. For this reason, it is difficult to acquire an accurate velocity in the scanning direction simply by subjecting the acceleration indicated by the acceleration information D2a to an integral process.

FIG. 9 is a graph indicating low-frequency components contained in the acceleration information D2a of FIG. 7; FIG. 10 is a graph indicating high-frequency components contained in the acceleration information D2a of FIG. 7. In the graph of FIG. 9, the vertical axis represents low-frequency components contained in the acceleration information D2a of FIG. 7, and the horizontal axis represents time. In the graph of FIG. 10, the vertical axis represents high-frequency components contained in the acceleration information D2a of FIG. 7, and the horizontal axis represents time.

Each of the graphs of FIGS. 9 and 10 indicates a portion of the acceleration information D2a of FIG. 7, or the acceleration over the period between when the liquid discharge head 3a starts moving along the printing route RU and when the liquid discharge head 3a finishes moving.

The above variations in the gravitational acceleration which are caused by the above error components tend to occur gradually. This is because those variations are caused by the change in the posture of the liquid discharge head 3a moving along the printing route RU at a constant velocity. Thus, the variations in the gravitational acceleration appear within a relatively low-frequency range. As illustrated in FIG. 9, the variations in the gravitational acceleration can be found in the low-frequency components contained in the acceleration in the scanning direction.

The variations in the acceleration which are caused by the movement of the liquid discharge head 3a in the scanning direction are, for example, based on motion errors of the joints J in the robot 2 and thus tend to appear in a shorter period than those caused by the gravitational acceleration. In short, the variations in the acceleration which are caused by the movement of the liquid discharge head 3a in the scanning direction tend to appear within a relatively high frequency range. As illustrated in FIG. 10, the variations in the gravitational acceleration which are caused by the movement of the liquid discharge head 3a in the scanning direction can be found in the high-frequency components contained in the acceleration in the scanning direction.

For the above reason, at Step S21b described above, the acceleration information D2a is subjected to an arithmetic process using a high pass filter. With this process, error components, which are low-frequency components in this case, are removed as noise components from the acceleration information D2a. As a result, the high-frequency components are extracted from the acceleration indicated by the acceleration information D2a, as illustrated in FIG. 10. The cutoff frequency of the high pass filter may depend on the velocity of motion of the robot 2. This cutoff frequency is not limited to a specific value but may be in the range from 30 to 100 Hz. The arithmetic process may be either an analog or digital process.

The variations in gravitational acceleration caused by the change in the posture of the liquid discharge head 3a, which turn out to be the largest error component, tend to appear within a relatively low-frequency range. Thus, by performing the arithmetic process using the high pass filter, such error components can be removed.

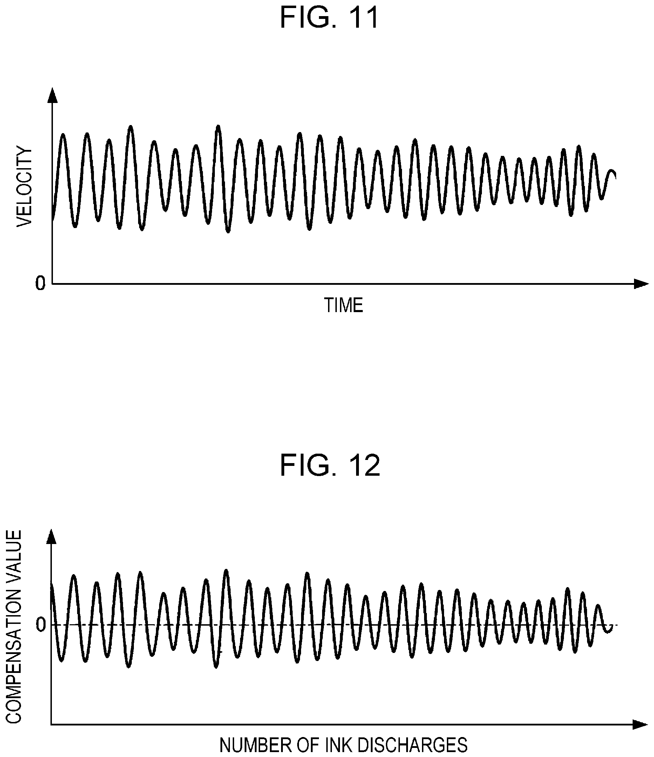

FIG. 11 is a graph indicating an example of the velocity information D2b based on the high-frequency components of FIG. 10. In FIG. 11, the vertical axis represents the value obtained by subjecting the high-frequency components of FIG. 10 to the integral process, and the horizontal axis represents time.

At Step S21c, the control section 8 subjects the high-frequency components that have been extracted at Step S21b to the integral process. As a result of this process, the control section 8 calculates a scanning velocity of the liquid discharge head 3a, which is a velocity in a scanning direction at which the liquid discharge head 3a moves along the printing route RU, as illustrated in FIG. 11. At Step S21c, as described above, the control section 8 calculates the scanning velocity based on the acceleration information D2a, thereby acquiring the velocity information D2b that indicates this scanning velocity.

FIG. 12 is a graph indicating an example of the ink discharge timing based on the velocity information of FIG. 11. In FIG. 12, the vertical axis represents a compensation value by which ink discharge time intervals are to be compensated. This compensation value is determined by setting the time intervals at which the liquid discharge head 3a has discharged ink droplets based on the provisional timing information Dt to zero. In this case, the compensation values on the positive side of the vertical axis correspond to those used to increase the ink discharge time interval, whereas the compensation values on the negative side of the vertical axis correspond to those used to decrease the ink discharge time interval. The horizontal axis represents the number of times that the liquid discharge head 3a discharges ink droplets during the printing operation.

At Step S22, the control section 8 calculates ink discharge timing of the liquid discharge head 3a, based on the velocity information D2b in such a way that the variations in the scanning velocity indicated by the velocity information D2b are canceled out.

More specifically, the control section 8 compensates the ink discharge timing in such a way that the ink discharge time interval decreases when the velocity of the liquid discharge head 3a exceeds a predetermined threshold. This is because, as the liquid discharge head 3a moves at a higher velocity, the positions at which the ink droplets land are farther from one another. Likewise, the control section 8 compensates the ink discharge timing in such a way that the ink discharge time interval increases when the velocity of the liquid discharge head 3a does not exceed the threshold. This is because, as the liquid discharge head 3a moves at a lower velocity, the positions at which the ink droplets land are closer to one another.

By compensating the ink discharge timing based on the provisional timing information Dt in this manner, the ink discharge timing of the liquid discharge head 3a can be calculated during the execution of the printing operation at Step S30.

As described above, a 3D object printing apparatus 1 controls an ink discharge timing of a liquid discharge head 3a, based on velocity information D2b regarding a velocity of the liquid discharge head 3a. Thus, even if the velocity of the liquid discharge head 3a in scanning direction fluctuates, for example, due to motion errors of a robot 2, the 3D object printing apparatus 1 can control lowering of the print quality. Consequently, it is possible to provide better print quality than before. Moreover, even when printing an image indicated by print data Img on a surface WF of a work W by printing a plurality of image elements thereon through respective passes, the 3D object printing apparatus 1 can reduce the difference in shading between an overlapping area of adjacent image elements and another area. Moreover, even when adjacent image elements are printed through respective passes in which the liquid discharge head 3a moves at different scanning velocities, the 3D object printing apparatus 1 can control lowering of the print quality of the image. 2. Second Embodiment

The second embodiment of the present disclosure will be described below. Hereinafter, if components to be described have substantially the same effects and functions as those in the foregoing first embodiment, the components will be denoted by the identical symbols, and detailed descriptions thereof will be skipped as appropriate.

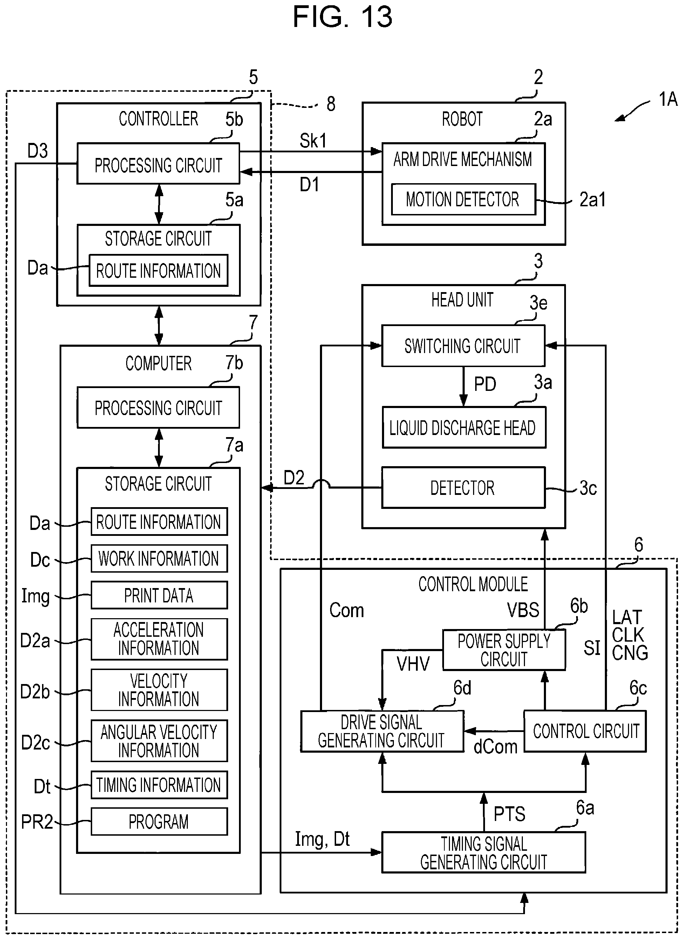

FIG. 13 is a block diagram of an electrical configuration of a 3D object printing apparatus 1A according to the second embodiment. The 3D object printing apparatus 1A uses a program PR2 instead of the program PR1 in the first embodiment. In addition, a detector 3c can detect an angular velocity of a liquid discharge head 3a in addition to an acceleration thereof. Except for these, the configuration of the 3D object printing apparatus 1A is substantially the same as that of the 3D object printing apparatus 1 in the first embodiment.

In this embodiment, the detector 3c includes an angular velocity sensor and thus can detect an angular velocity applied to a liquid discharge head 3a. This angular velocity sensor may be a triaxial angular velocity sensor. In this embodiment, a storage circuit 7a stores angular velocity information D2c. The angular velocity information D2c may be information that indicates the angular velocity applied to the liquid discharge head 3a and is to be acquired based on movement information D2. In this embodiment, the movement information D2 contains acceleration information D2a and the angular velocity information D2c. In this embodiment, both the acceleration information D2a and the angular velocity information D2c are acquired by obtaining the movement information D2.

In this embodiment, a processing circuit 7b executes the program PR2, thereby performing various processes to generate timing information Dt. The processing circuit 7b thereby can generate the timing information Dt, based on the movement information D2 that indicates the detection result of the detector 3c. In this embodiment, the processing circuit 7b acquires both the acceleration information D2a and the angular velocity information D2c, based on the movement information D2 acquired during the execution of a preliminary operation (described later). The processing circuit 7b then acquires velocity information D2b, based on both the movement information D2 and the angular velocity information D2c. The processing circuit 7b then generates the timing information Dt, based on the velocity information D2b.

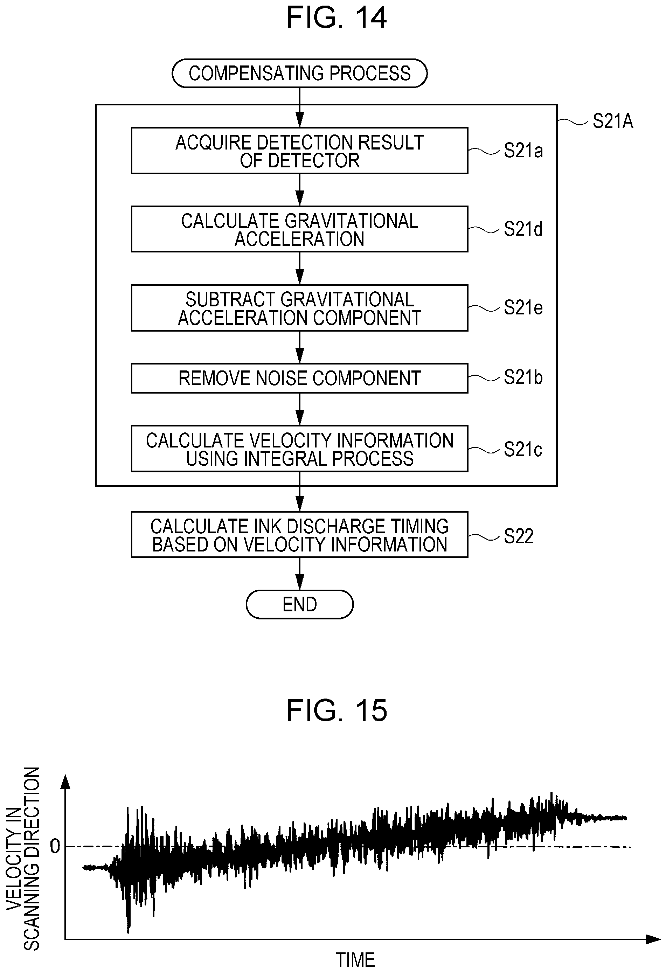

FIG. 14 is a flowchart of a compensating process to be performed by the 3D object printing apparatus 1A. The 3D object printing apparatus 1A performs Steps S21A and S22, which are included in Step S20.

Step S21A is substantially the same as Step S21 in the first embodiment except for Steps S21d and S21e which are newly added. At Step S21a in this embodiment, however, the processing circuit 7b acquires not only the acceleration information D2a but also the angular velocity information D2c, based on the movement information D2. As a result, a control section 8 acquires the angular velocity information D2c regarding the angular velocity of the liquid discharge head 3a, based on the detection result of the detector 3c, at Step S21a.

At Step S21d that follows Step S21a, the control section 8 calculates the gravitational acceleration applied to the liquid discharge head 3a, based on the angular velocity information D2c. As a result of this, even if the acceleration information D2a contains information regarding some error components, such as those caused by the phenomenon in which the acceleration of the liquid discharge head 3a fluctuates in the gravitational direction in relation to a changing posture of the liquid discharge head 3a, the control section 8 can easily remove these errors and calculate a highly accurate scanning velocity.

At Step S21e that follows Step S21d, the control section 8 subtracts the gravitational acceleration that has been calculated at Step S21d from the acceleration indicated by the acceleration information D2a. The control section 8 thereby removes a component of the gravitational acceleration which is contained in the acceleration indicated by the acceleration information D2a.

After Step S21e, the control section 8 performs Steps S21b and S21c in this order, as in the foregoing first embodiment.

FIG. 15 is a graph indicating an example of acceleration information D2a acquired during the execution of the preliminary operation. In FIG. 15, the vertical axis represents the acceleration in the scanning direction which is indicated by the acceleration information D2a acquired during the execution of the preliminary operation at Step S20, and the horizontal axis represents time. In this embodiment, the control section 8 acquires the acceleration information D2a as illustrated in FIG. 15 at Step S21a, as in the foregoing first embodiment.

The acceleration in the scanning direction, illustrated in FIG. 15, contains not only the acceleration of the liquid discharge head 3a when the liquid discharge head 3a is scanning but also a component (gravitational acceleration component) in the scanning direction which are contained in the gravitational acceleration applied to the liquid discharge head 3a.

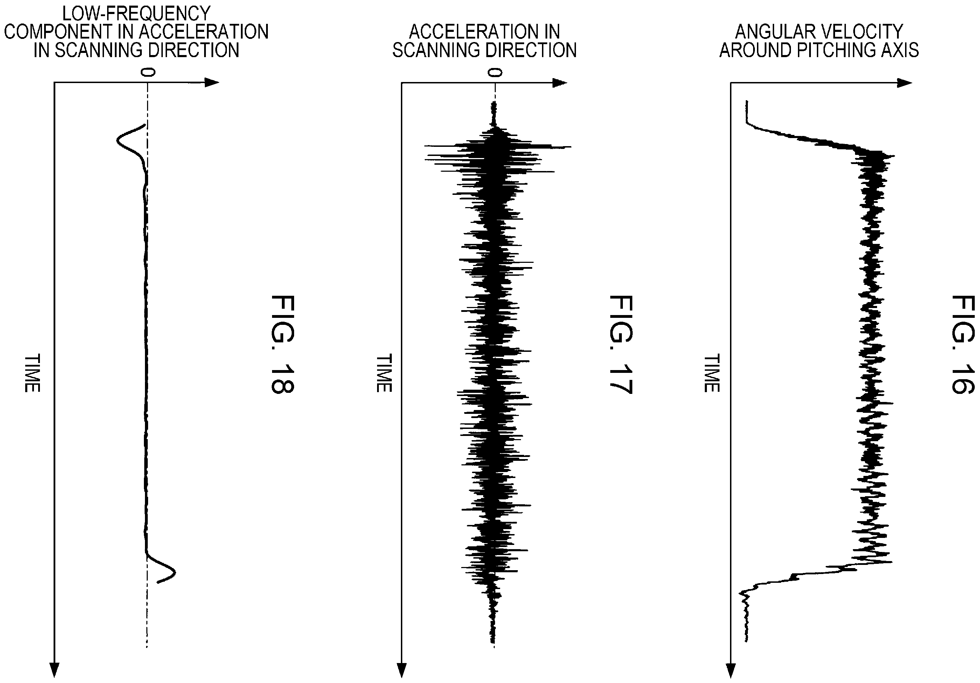

FIG. 16 is a graph indicating an example of the angular velocity information D2c acquired during the execution of the preliminary operation. In FIG. 16, the vertical axis represents the angular velocity indicated by the angular velocity information D2c acquired during the execution of the preliminary operation at Step S20, and the horizontal axis represents time. This angular velocity may be an angular velocity around the b-axis, which corresponds to a pitching axis of the liquid discharge head 3a.

The angular velocity, as illustrated in FIG. 16, is generated based on the movement information D2 indicated by the detection result of the detector 3c, at Step S21d.

FIG. 17 is a graph indicating an example of the acceleration information D2a from which gravitational acceleration component have been subtracted. In FIG. 17, the vertical axis represents the acceleration indicated by the acceleration information D2a that has been compensated by subtracting the gravitational acceleration component based on the angular velocity information D2c from the acceleration information D2a, and the horizontal axis represents time.

The gravitational acceleration component in the scanning direction which is applied to the liquid discharge head 3a is calculated based on the angular velocity information D2c, at Step S21d.

The gravitational acceleration that has been calculated at Step S21d is subtracted from the acceleration in the scanning direction which is indicated by the acceleration information D2a, at Step S21e. As a result of this, the acceleration information D2a is compensated, as illustrated in FIG. 17. In short, the acceleration of the liquid discharge head 3a from which the gravitational acceleration component in the scanning direction have been subtracted is calculated at Step S21e.

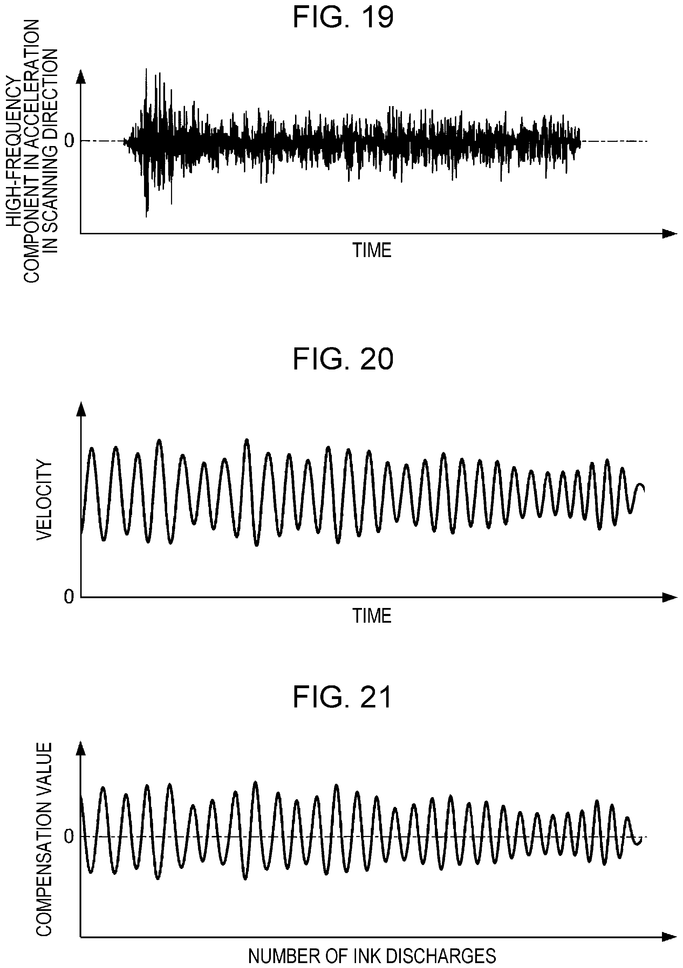

FIG. 18 is a graph indicating low-frequency components contained in the acceleration information D2a of FIG. 17; FIG. 19 is a graph indicating high-frequency components contained in the acceleration information D2a of FIG. 17; FIG. 20 is a graph indicating an example of the velocity information D2b acquired based on the high-frequency components of FIG. 19; and FIG. 21 is a graph indicating an example of an ink discharge timing based on the velocity information D2b of FIG. 20.

After Step S21e, the acceleration information D2a may contain low-frequency components illustrated in FIG. 18 and high-frequency components as illustrated in FIG. 19. At Step S21b in this embodiment which follows Step S21e, the control section 8 subjects the acceleration information D2a to an arithmetic process using a high pass filter. With this process, some error components, which are low-frequency components in this case, are removed as noise components from the acceleration information D2a.

After Step S21b, the control section 8 performs Steps S21c and S22 in this order, as in the foregoing first embodiment. As a result of these steps, the control section 8 calculates a scanning velocity of the liquid discharge head 3a as illustrated in FIG. 20, which refers to a velocity of the liquid discharge head 3a in the scanning direction when the liquid discharge head 3a moves along a printing route RU. The control section 8 then compensates the ink discharge timing of the liquid discharge head 3a, based on the velocity information D2b in such a way that variations in the scanning velocity indicated by the velocity information D2b are canceled out.

At Step S21A, as described above, a control section 8 calculates a velocity of a liquid discharge head 3a in the scanning direction, based on acceleration information D2a and the gravitational acceleration. The control section 8 thereby compensates an ink discharge timing acquired during the execution of a printing operation at Step S30, based on the acceleration information D2a acquired when a liquid discharge head 3a is actually scanning along the printing route RU. Consequently, it is possible to provide appropriately improved print quality.

At Steps S21A and S22, the control section 8 controls the ink discharge timing of the liquid discharge head 3a, based on both angular velocity information D2c and velocity information D2b. In this way, the control section 8 can highly accurately calculate the scanning velocity, based on the acceleration information D2a. Consequently, it is possible to further appropriately control the ink discharge timing of the liquid discharge head 3a.

### 3. Modifications

The foregoing first and second embodiments may be modified in various ways. Some concrete modifications applicable to those embodiments will be described below. It should be noted that two or more modifications may be selected as appropriate from such modifications and combined together unless these modifications conflict with each other.

### 3-1. Modification 1

In the foregoing first and second embodiments, a liquid discharge head 3a is configured to move in the X1 direction as seen from a direction along the Z-axis during the execution of a printing operation; however, there is no limitation on a moving direction of the liquid discharge head 3a. As an alternative example, the liquid discharge head 3a is configured to move in the X2 direction as seen from a direction along the Z-axis during the execution of the printing operation. As another alternative example, the liquid discharge head 3a is configured to move in a direction orthogonal to the X-axis as seen from a direction along the Z-axis during the execution of the printing operation. As still another alternative example, the liquid discharge head 3a is configured to move in a direction inclined with respect to both the X-axis and the Y-axis as seen from a direction along the Z-axis during the execution of the printing operation.

### 3-2. Modification 2

In the first and second embodiments, a vertical multi-axis robot with six axes is used as a robot 2; however, there is no limitation on the number of axes of the robot 2. The robot 2 may be an articulated robot with any given number of axes. Furthermore, the arm 220 of the robot 2 may include a telescopic or linear motion mechanism in addition to joints equipped with a rotating mechanism. However, from the viewpoint of balancing the print quality in a printing operation and the degree of freedom of robot motion in a non-printing operation, the robot 2 may be a multi-axis robot with six or more axes.

### 3-3. Modification 3

In the foregoing first and second embodiments, a screw or other similar means is used to fix a head unit 3 to a robot 2; however, there is no limitation on how to fix the head unit 3. Alternatively, the head unit 3 may be fixed to the robot 2 by gripping the head unit 3 with a gripping mechanism, such as a hand, attached as an end-effector to the robot 2.

### 3-4. Modification 4

In the foregoing first and second embodiments, a 3D object printing apparatus 1 uses a single type of ink to print images; however, there is no limitation on the number of types of ink. Alternatively, the 3D object printing apparatus 1 may use two or more types of ink. Furthermore, a head unit 3 has two nozzle arrays NL; however, there is no limitation on the number of nozzle arrays NL. Alternatively, the head unit 3 may have two or more nozzle arrays NL.

### 3-5. Modification 5

In the foregoing first and second embodiments, a control section 8 acquires acceleration information D2a, based on movement information D2 that has been acquired during a preliminary operation. However, the control section 8 does not necessarily have to perform the preliminary operation. Alternatively, the control section 8 may skip the preliminary operation and acquire the acceleration information D2a, based on the movement information D2 that has been acquired during a printing operation. In this case, the control section 8 may compensate an ink discharge timing of a liquid discharge head 3a in real time by using timing information Dt based on the acceleration information D2a that has been acquired during the printing operation.

### 4. Supplementary note

Some supplementary notes of the present disclosure will be described below. Supplementary Note 1

According to a first aspect of the present disclosure, a three-dimensional object printing apparatus includes: a liquid discharge head that discharges a liquid toward a work; an articulated robot that changes a position of the liquid discharge head relative to the work, the articulated robot having a tip end that supports the liquid discharge head; a detector that detects motion of the liquid discharge head in a scanning direction; and a control section that controls the motion of the liquid discharge head and motion of the articulated robot. The control section acquires velocity information regarding a velocity of the liquid discharge head, based on a detection result of the detector and controls an ink discharge timing of the liquid discharge head, based on the velocity information.

With the first aspect, the ink discharge timing of the liquid discharge head is controlled based on the velocity information regarding the velocity of the liquid discharge head. Thus, even if the velocity of the liquid discharge head in the scanning direction fluctuates, for example, due to motion errors of the articulated robot, lowering of the print quality can be controlled. Consequently, it is possible to provide better print quality than before.

In contrast with the above, if a liquid discharge head discharges a liquid at constant time intervals while moving in the scanning direction at fluctuating velocities, for example, due to motion errors of the robot 2, liquid droplets that have been discharged from the liquid discharge head onto the work may be arranged thereon at irregular intervals. In addition, some of the ink droplets may coalesce into a globule. As a result, the print quality might be lowered.

### Supplementary Note 2

According to a second aspect of the present disclosure, which is an example of the foregoing first aspect, the detector may detect an acceleration of the liquid discharge head in the scanning direction. The control section may acquire acceleration information regarding the acceleration of the liquid discharge head, based on the detection result of the detector, may acquire the velocity information, based on the acceleration information, and may control the ink discharge timing of the liquid discharge head, based on the velocity information.

With the second aspect, highly accurate acceleration information may be able to be swiftly acquired.

### Supplementary Note 3

According to a third aspect of the present disclosure, which is an example of the foregoing second aspect, the control section may perform a preliminary operation in which the liquid discharge head scans along a printing route and a printing operation in which the liquid discharge head scans along the printing route and the liquid discharge head discharges the liquid toward the work. The control section may control the ink discharge timing of the liquid discharge head during execution of the printing operation, based on the acceleration information that has been acquired during execution of the preliminary operation.

With the third aspect, the ink discharge timing may be compensated during the execution of the printing operation, based on the acceleration information acquired when the liquid discharge head is actually scanning along the printing route. Consequently, it may be possible to provide appropriately improved print quality.

### Supplementary Note 4

According to a fourth aspect of the present disclosure, which is an example of the foregoing third aspect, the control section may calculate a scanning velocity, based on the acceleration information, the scanning velocity being a velocity in the scanning direction at which the liquid discharge head moves along the printing route. The control section may control the ink discharge timing of the liquid discharge head during the execution of the printing operation, based on the scanning velocity.

With the fourth aspect, the ink discharge timing of the liquid discharge head may be able to be appropriately controlled in accordance with the shape of the printing route or the work. When printing an image on a nonplanar print surface of a work, a three-dimensional object printing apparatus needs to change the position and posture of a liquid discharge head in accordance with the shape of this print surface. In this case, the gravitational acceleration is applied to the liquid discharge head in varying directions. Thus, if the control section simply converts acceleration, which is a detection result of an acceleration sensor that acts as the detector, into a velocity, this velocity may disadvantageously contain some error components with respect to a velocity of the liquid discharge head in the scanning direction. Supplementary Note 5

According to a fifth aspect of the present disclosure, which is an example of the foregoing fourth aspect, the control section may calculate the scanning velocity by subjecting the acceleration information to an arithmetic process using a high pass filter.

With the fifth aspect, even if the acceleration information contains information regarding some error components, such as those caused by the phenomenon in which the acceleration of the liquid discharge head fluctuates in the gravitational direction in relation to a changing posture of the liquid discharge head, it may be possible to easily remove this error and calculate a highly accurate scanning velocity.

### Supplementary Note 6

According to a sixth aspect of the present disclosure, which is an example of one of the foregoing second to fifth aspects, the detector may be able to detect an angular velocity applied to the liquid discharge head. The control section may acquire angular velocity information regarding the angular velocity of the liquid discharge head, based on the detection result of the detector and may control the ink discharge timing of the liquid discharge head, based on both the angular velocity information and the velocity information.

With the sixth aspect, the scanning velocity may be able to be highly accurately calculated based on the acceleration information. Consequently, it may be possible to further appropriately control the ink discharge timing of the liquid discharge head.

### Supplementary Note 7

According to a seventh aspect of the present disclosure, which is an example of the foregoing sixth aspect, the control section may calculate the gravitational acceleration applied to the liquid discharge head, based on the angular velocity information and may calculate the velocity of the liquid discharge head in the scanning direction, based on both the acceleration information and the gravitational acceleration.

With the seventh aspect, the ink discharge timing may be compensated during the execution of the printing operation, based on the acceleration information acquired when the liquid discharge head is actually scanning along the printing route. Consequently, it may be possible to provide appropriately improved print quality.

### Supplementary Note 8

According to an eighth aspect of the present disclosure, which is an example of one of the foregoing first to seventh aspects, the three-dimensional object printing apparatus may further include a motion detector that detects motion of the articulated robot, the motion detector being provided in the articulated robot. The control section may determine a timing at which the liquid discharge head starts to discharge the liquid, based on a detection result of the motion detector.

With the eighth aspect, the motion of the articulated robot may be able to be synchronized with the motion of the liquid discharge head in a simplified manner. Furthermore, it may be possible to provide a further accurate ink discharge timing of the liquid discharge head and a highly accurate timing of acquiring the velocity information.

### Supplementary Note 9

According to a ninth aspect of the present disclosure, which is an example of the foregoing eighth aspect, the control section may be able to determine a timing of acquiring the velocity information, based on the detection result of the motion detector.

With the ninth aspect, the velocity information may be able to be acquired at a further accurate timing.

### Supplementary Note 10

According to a tenth aspect of the present disclosure, a printing method uses a three-dimensional object printing apparatus that includes a liquid discharge head that discharges a liquid toward a work, an articulated robot that varies a position of the liquid discharge head relative to the work, the articulated robot having a tip end that supports the liquid discharge head, and a detector that detects motion of the liquid discharge head in a scanning direction. The printing method includes: acquiring velocity information regarding a velocity of the liquid discharge head, based on a detection result of the detector; and controlling an ink discharge timing of the liquid discharge head, based on the velocity information.

With the tenth aspect, the ink discharge timing of the liquid discharge head is controlled based on the velocity information regarding the velocity of the liquid discharge head. Thus, even if the velocity of the liquid discharge head in the scanning direction fluctuates, for example, due to motion errors of the articulated robot, lowering of the print quality can be controlled. Consequently, it is possible to provide better print quality than before.

## Claims

1. A three-dimensional object printing apparatus comprising:
a liquid discharge head that discharges a liquid toward a work;
an articulated robot that changes a position of the liquid discharge head relative to the work, the articulated robot having a tip end that supports the liquid discharge head;
a detector that detects motion of the liquid discharge head in a scanning direction; and
a control section that controls the motion of the liquid discharge head and motion of the articulated robot, wherein
the control section acquires velocity information regarding a velocity of the liquid discharge head, based on a detection result of the detector and controls an ink discharge timing of the liquid discharge head, based on the velocity information.

2. The three-dimensional object printing apparatus according to claim 1, wherein
the detector detects an acceleration of the liquid discharge head in the scanning direction, and
the control section acquires acceleration information regarding the acceleration of the liquid discharge head, based on the detection result of the detector, acquires the velocity information, based on the acceleration information, and controls the ink discharge timing of the liquid discharge head, based on the velocity information.

3. The three-dimensional object printing apparatus according to claim 2, wherein
the control section performs a preliminary operation in which the liquid discharge head scans along a printing route and a printing operation in which the liquid discharge head scans along the printing route and the liquid discharge head discharges the liquid toward the work, and
the control section controls the ink discharge timing of the liquid discharge head during execution of the printing operation, based on the acceleration information that has been acquired during execution of the preliminary operation.

4. The three-dimensional object printing apparatus according to claim 3 or claim 4, wherein
the control section calculates a scanning velocity, based on the acceleration information, the scanning velocity being a velocity in the scanning direction at which the liquid discharge head moves along the printing route, and
the control section controls the ink discharge timing of the liquid discharge head during the execution of the printing operation, based on the scanning velocity.

5. The three-dimensional object printing apparatus according to claim 4, wherein
the control section calculates the scanning velocity by subjecting the acceleration information to an arithmetic process using a high pass filter.

6. The three-dimensional object printing apparatus according to any one of claims 2 to 5, wherein
the detector can detect an angular velocity applied to the liquid discharge head, and the control section acquires angular velocity information regarding the angular velocity of the liquid discharge head, based on the detection result of the detector and controls the ink discharge timing of the liquid discharge head, based on both the angular velocity information and the velocity information.

7. The three-dimensional object printing apparatus according to claim 6, wherein
the control section calculates the gravitational acceleration applied to the liquid discharge head, based on the angular velocity information and calculates the velocity of the liquid discharge head in the scanning direction, based on both the acceleration information and the gravitational acceleration.

8. The three-dimensional object printing apparatus according to any one of claims 1 to 7, further comprising
a motion detector that detects motion of the articulated robot, the motion detector being provided in the articulated robot, wherein
the control section determines a timing at which the liquid discharge head starts to discharge the liquid, based on a detection result of the motion detector.

9. The three-dimensional object printing apparatus according to claim 8, wherein
the control section determines a timing of acquiring the velocity information, based on the detection result of the motion detector.

10. A printing method using a three-dimensional object printing apparatus that includes a liquid discharge head that discharges a liquid toward a work, an articulated robot that varies a position of the liquid discharge head relative to the work, the articulated robot having a tip end that supports the liquid discharge head, and a detector that detects motion of the liquid discharge head in a scanning direction, the printing method comprising:
acquiring velocity information regarding a velocity of the liquid discharge head, based on a detection result of the detector; and
controlling an ink discharge timing of the liquid discharge head, based on the velocity information.
